# EUROPEAN PATENT APPLICATION

(11) **EP 4 397 191 A1**
(43) Date of publication of application: **10.07.2024**
(21) Application number: 22864147.8
(22) Date of filing: 02.08.2022
(51) Int. Cl.: A23P 30/00, B01F 27/90

(54) **FOOD PROCESSING DEVICE**

(30) Priority: 30.08.2021 JP 2021139885
(71) Applicant: Panasonic Intellectual Property Management Co., Ltd., Kadoma-shi, Osaka 571-0057 (JP)
(72) Inventor: INO, Daisuke, Kadoma-shi, Osaka 571-0057 (JP); UKAI, Kunihiro, Kadoma-shi, Osaka 571-0057 (JP); HASHIMOTO, Yasuhiro, Kadoma-shi, Osaka 571-0057 (JP); YAMAJI, Satoru, Kadoma-shi, Osaka 571-0057 (JP)
(74) Representative: Grünecker Patent- und Rechtsanwälte PartG mbB
(86) International application number: PCT/JP2022/029611
(87) International publication number: WO 2023/032560

(57) **Abstract**

A food processing apparatus (1a) in the present disclosure includes a reaction tank (10), a stirring body (20), and catalyst-attached members (30). The reaction tank (10) stores a liquid reactant (5) for food. The stirring body (20) stirs the reactant (5) stored in the reaction tank (10) by rotating. The catalyst-attached members (30) each have an outer surface at which a photocatalyst is present. The food processing apparatus (1a) satisfies the following condition (I), the following condition (II), or the following conditions (I) and (II). (I) A diameter D₂₀ of a circle that is a track L₂₀ formed by an outermost end (20e) of the stirring body (20) in a direction perpendicular to a rotation axis Ax when the stirring body (20) rotates is greater than or equal to a maximum dimension D₃₀. (II) The stirring body (20) pushes the reactant (5) toward a bottom (10b) of the reaction tank (10) in a direction parallel to the rotation axis Ax when the stirring body (20) rotates.

## Description

### Technical Field

The present disclosure relates to a food processing apparatus.

### Background Art

A technology that processes an object by using light such as ultraviolet light has been known in the related art.

For example, PTL 1 describes a continuous water treating apparatus that includes an ultraviolet lamp. This water treating apparatus includes a reaction tank, the ultraviolet lamp, a stirring blade, a sedimentation tube, and a drainage pump. A liquid to be treated is accommodated in the reaction tank. Photocatalyst particles are input in the liquid to be treated and caused by the stirring blade to disperse and flow in the liquid to be treated. The photocatalyst particles flowing in the liquid to be treated absorb light energy of the ultraviolet lamp set in the reaction tank and cause a photocatalytic reaction, and radicals generated by this photocatalytic reaction oxidize and decompose a dissolved substance in the liquid to be treated. The treated liquid after the oxidative decomposition is separated with the sedimentation tube into the photocatalyst particles and the treated liquid. The treated liquid is drained by the drainage pump to the outside of the system.

PTL 2 describes a reactor that performs an oxidative decomposition treatment of an organic substance by using ultraviolet light and an oxidizing agent in combination. This reactor includes a vertical cylindrical reaction tank. An inner cylinder is vertically disposed at a center portion inside the reaction tank. The inner cylinder is a cylinder whose upper and lower ends are open. An impeller is disposed inside the inner cylinder. The impeller is fixed to the lower end of a shaft body of an axial stirrer. Ultraviolet lamps are disposed between the inner cylinder and the inner wall of the reaction tank. Liquid to be treated is introduced to the inside of the reaction tank. An oxidizing agent is added to the liquid to be treated. The liquid to be treated is circulated by the operation of an axial pump constituted by the inner cylinder and the axial stirrer and is subjected to an ultraviolet reaction treatment by being irradiated with ultraviolet light from the ultraviolet lamp.

### Citation List

### Patent Literature

PTL 1: Japanese Unexamined Patent Application Publication No. 2002-301474
PTL 2: Japanese Unexamined Patent Application Publication No. 9-122641

### Summary of Invention

The present disclosure provides a food processing apparatus that is advantageous from the point of view of reducing the time of processing that uses a photocatalyst.

A food processing apparatus in the present disclosure includes:
a reaction tank in which a liquid reactant for food is to be stored;
a stirring body that is rotatable and that stirs the reactant stored in the reaction tank; and
catalyst-attached members that are disposed inside the reaction tank to be away from each other around a rotation axis of the stirring body,
in which each of the catalyst-attached members includes a light source and a tube,
in which the tube has an outer surface at which a photocatalyst is present, and the tube accommodates the light source and transmits light from the light source, and
in which the stirring body satisfies a following condition (I), a following condition (II), or the following conditions (I) and (II).
   (I) A diameter of a circle that is a track formed by an outermost end of the stirring body in a direction perpendicular to the rotation axis when the stirring body rotates is greater than or equal to a maximum dimension of the catalyst-attached members in the direction perpendicular to the rotation axis.
   (II) The stirring body pushes the reactant toward a bottom of the reaction tank in a direction parallel to the rotation axis when the stirring body rotates.

The food processing apparatus in the present disclosure is advantageous from the point of view of reducing the time of processing using a photocatalyst.

### Brief Description of Drawings

[Fig. 1] Fig. 1 is a plan view of one example of a food processing apparatus in an embodiment.
[Fig. 2] Fig. 2 is a sectional view of the food processing apparatus taken along the line II-II in Fig. 1.
[Fig. 3] Fig. 3 is a side view of a stirring blade of the food processing apparatus in Fig. 1.
[Fig. 4] Fig. 4 is a schematic plan view of an analytical model of a food processing apparatus in a calculation in an example.
[Fig. 5] Fig. 5 is a sectional view of the analytical model taken along the line V-V in Fig. 4.

### Description of Embodiments

### (Underlying Knowledge Forming Basis of the Present Disclosure)

A photocatalyst is considered to be used to process a liquid reactant for food. The reactant denotes a substance that is involved in a chemical reaction and changed by the chemical reaction. For example, a catalyst-attached member that includes a tube having an outer surface on which a photocatalyst is present and a light source accommodated inside the tube is considered to be used to process a liquid reactant while stirring the reactant. In this case, a predetermined component of the liquid reactant is transported toward the outer surface of the tube while light from the light source is transmitted through the tube. In this state, a reaction for processing the reactant with the photocatalyst occurs on the outer surface of the tube.

In processing of a liquid reactant for food, efficiently transporting a predetermined component of the liquid reactant toward the outer surface of a tube on which a photocatalyst is present is important to reduce the time of processing using the photocatalyst. Meanwhile, it is not easy to increase the diffusion speed with the concentration gradient of the predetermined component of the reactant at a boundary film that is in contact with the outer surface at which the photocatalyst is present. According to studies by the present inventors, the mass transport speed of a predetermined component of a reactant is not increased even by, for example, increasing the rotational speed of a stirring blade for stirring the reactant. In particular, it has been found that, when catalyst-attached members are disposed in a reaction tank, the mass transport speed of the predetermined component is not easily increased even when the rotational speed of the stirring blade is increased. Then, as a result of intensive studies, the present inventors have newly found advantageous conditions of stirring of a reactant to increase the shearing stress at the outer surface at which the photocatalyst is present and increase the mass transport speed of the predetermined component of the reactant. On the basis of such new findings, the present inventors have completed a food processing apparatus in the present disclosure.

### (Embodiments of Present Disclosure)

Hereinafter, embodiments of the present disclosure will be described with reference to the drawings. Note that the embodiments described below each indicate a comprehensive or specific example. Numerical values, shapes, materials, constituent components, arrangement positions and connection forms of the constituent components, process conditions, steps, the order of the steps, and the like indicated in the following embodiments are examples and are not intended to limit the present disclosure. Among the constituent components in the following embodiments, constituent components that are not described in independent claims, which indicate the most generic concepts, are described as optional constituent components. The drawings are schematic diagrams and are not necessarily illustrated strictly.

### (Embodiments)

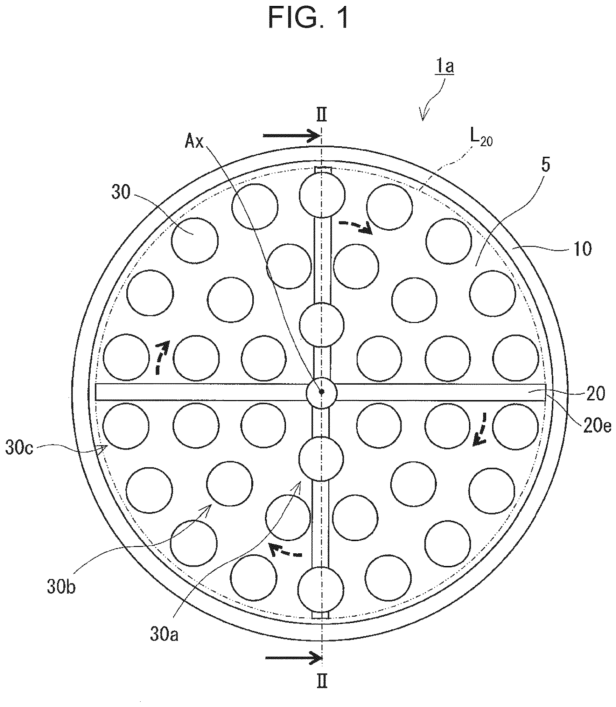

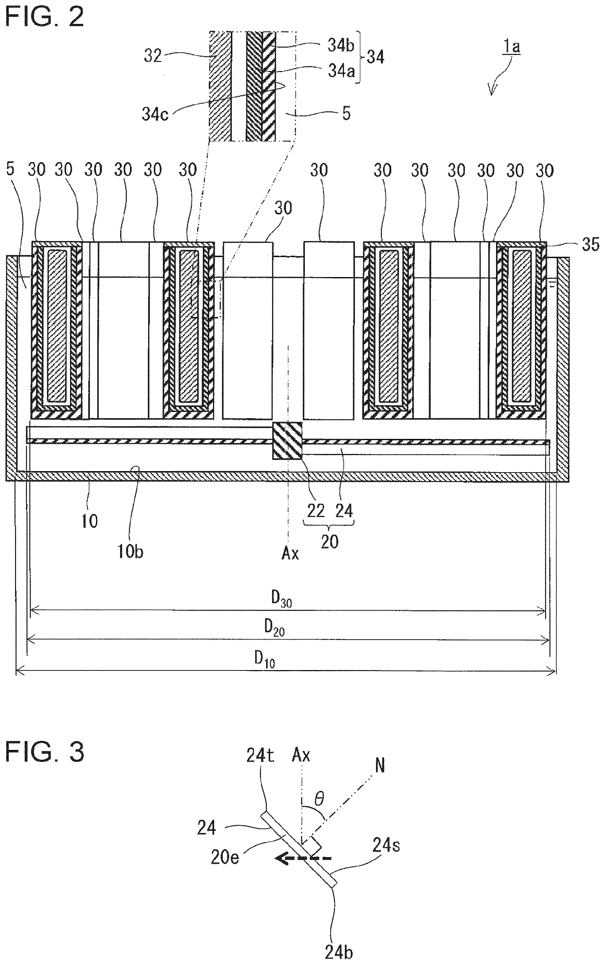

Fig. 1 is a schematic plan view of a food processing apparatus 1a in an embodiment. Fig. 2 is a sectional view of the food processing apparatus 1a taken along the line II-II in Fig. 1. The food processing apparatus 1a includes a reaction tank 10, a stirring body 20, and catalyst-attached members 30. A liquid reactant 5 for food is stored in the reaction tank 10. The stirring body 20 rotates to thereby stir the reactant 5 stored in the reaction tank 10. In Fig. 1, the arrows with dashed lines indicate the rotation direction of the stirring body 20. The catalyst-attached members 30 are disposed inside the reaction tank 10 to be away from each other around a rotation axis Ax of the stirring body 20. As illustrated in Fig. 2, each of the catalyst-attached members 30 includes a light source 32 and a tube 34. The tube 34 has an outer surface 34c on which a photocatalyst is present. The tube 34 accommodates the light source 32. The tube 34 transmits light from the light source 32. The stirring body 20 satisfies the following condition (I), the following condition (II), or the following conditions (I) and (II).
(I) A diameter D₂₀ of a circle, which is a track L₂₀ that is formed by an outermost end 20e of the stirring body 20 in a direction perpendicular to the rotation axis Ax when the stirring body 20 rotates, is greater than or equal to a maximum dimension D₃₀. The maximum dimension D₃₀ is a maximum dimension of a member group that is formed by the catalyst-attached members 30 in the direction perpendicular to the rotation axis Ax.
(II) The stirring body 20 pushes the reactant 5 toward a bottom 10b of the reaction tank 10 in a direction parallel to the rotation axis Ax when the stirring body 20 rotates.

The reactant 5 is stored in the reaction tank 10 so as to be in contact with the outer surface 34c of the tube 34. As illustrated in Fig. 2, the tube 34 includes, for example, a support 34a and a catalyst layer 34b. The catalyst layer 34b serves as the outer surface 34c of the tube 34 and contains a photocatalyst. The support 34a supports the catalyst layer 34b. The support 34a is disposed between the light source 32 and the catalyst layer 34b in the thickness direction of the catalyst layer 34b.

The light emitted from the light source 32 is not limited to light having a specific wavelength. The light source 32 emits, for example, ultraviolet light. For example, the light source 32 emits light that has a center wavelength of 260 to 400 nm. The light source 32 may emit light that has a center wavelength of 365 nm. The light source 32 is not limited to be in a specific form. The light source 32 may be a light emitting diode (LED), may be a high pressure mercury lamp, may be a low pressure mercury lamp, and may be a fluorescent lamp.

The ultraviolet light emitted from the light source 32 is transmitted through the support 34a of the tube 34 and irradiates the catalyst layer 34b. Consequently, the photocatalyst present at the outer surface 34c over the entirety of the catalyst layer 34b is activated. As a result, a chemical reaction for processing of the reactant 5 can proceed selectively at an interface between the reactant 5 and the catalyst-attached members 30.

A reaction efficiency η of a predetermined chemical reaction at the surface of the photocatalyst is maximized, for example, in accordance with the following method. The reaction efficiency η is a physical quantity that is obtained by dividing the number N of times of reactions by a sum total ET of energy that has been input to the system. The sum total ET of the input energy is a sum of electrical energy E1 [W] required for causing the light source 32 to emit light and energy E2 [W] required for rotating the stirring body 20. An irradiation speed k1 [photon/sec] of a photon emitted from the light source 32 and irradiates the catalyst layer 34b can be adjusted by emission intensity of the light source 32. A transport speed k2 [photon/sec] of a predetermined component transported from the reactant 5 to the outer surface 34c is considered to be adjustable by the number of rotations of the stirring body 20. For example, when the irradiation speed k1 and the transport speed k2 coincide with each other, energy is not wasted and the reaction efficiency η can have the optimum value. However, if the stirring body 20 does not satisfy the following condition (I), the following condition (II), or the following conditions (I) and (II), it is difficult to adjust the transport speed k2 to increase even when the number of rotations of the stirring body 20 is increased.

In the theory of mass transport of photons in a solution, mass transport by a convection current and mass transport by concentration diffusion are considered separately. The flow of the reactant 5 in a bulk region of the reactant 5 except the vicinity of the outer surface 34c is a convection current. In the bulk region of the reactant 5, the mass transport by the convection current is dominant. The mass transport speed is thus easily increased when, for example, the rotational speed of the stirring body 20 is increased. Meanwhile, in the vicinity of the outer surface 34c, there is a region in which the convection current does not affect. This region is called a boundary film layer. The boundary film layer is in contact with the outer surface 34c and has a limited thickness L. A mass transport mechanism that is dominant in the boundary film layer is concentration diffusion due to a concentration difference of a substance. In a state in which the reactant 5 is sufficiently stirred, a concentration Cbulk of a predetermined component in the bulk region of the reactant 5 is equal to a concentration that is calculated macroscopically from an input amount of the predetermined component of the reactant 5. When a reaction that involves the predetermined component proceeds at the outer surface 34c, a concentration Csurface of the predetermined component at the outer surface 34c greatly decreases from the concentration Cbulk by being consumed by the reaction that involves the predetermined component. In some cases, the concentration Csurface decreases to be a value that is approximate to zero. The driving force of the mass transport at the boundary film layer is concentration difference ΔC = Cbulk - Csurface. The mass transport with the concentration diffusion at the boundary film layer is a bottleneck for improvement in the transport speed k2. This is because the speed of mass transport by the concentration diffusion at the boundary film layer is considerably smaller than the speed of mass transport by the convection current.

A mass transport speed v with the concentration diffusion at the boundary film layer is affected by the thickness L of the boundary film layer and has a relationship of v = ΔC/L. Therefore, a situation in which the thickness L of the boundary film layer is small is advantageous from the point of view of increasing the mass transport speed v.

The rotation of the stirring body 20 generates a convection current. This convection current generates a shearing stress τ at the outer surface 34c. The shearing stress τ at the outer surface 34c correlates with the thickness L of the boundary film layer and is understood to be a convenient index for indirectly evaluating the thickness L of the boundary film layer. When the shearing stress τ at the outer surface 34c increases, the thickness L of the boundary film layer easily decreases, and when the shearing stress τ further increases, the decrease in the thickness L approaches a limit. The shearing stress τ at the outer surface 34c when the reactant 5 is stirred by the rotation of the stirring body 20 can be calculated, for example, in accordance with numerical fluid dynamics.

By the food processing apparatus 1a satisfying the condition (I), the condition (II), or the conditions (I) and (II), an average value τ_{AVG} of the shearing stress in a minute region of the outer surface 34c easily increases. Therefore, the thickness of the boundary film layer relating to the mass transport of the predetermined component of the reactant 5 involved in the reaction at the outer surface 34c to the outer surface 34c easily decreases. As a result, the time required for processing of the reactant 5 in the food processing apparatus 1a is easily reduced.

Under the condition (I), the maximum dimension D₃₀ is determined on the basis of the member group including all of the catalyst-attached members 30 in the food processing apparatus 1a. The maximum dimension D₃₀ is equal to, for example, a diameter of a cylinder that is circumscribed with the member group and that has a smallest cross-sectional area. When the food processing apparatus 1a satisfies the condition (I), the relationship between the diameter D₂₀ and the maximum dimension D₃₀ is not limited to a specific relationship as long as the diameter D₂₀ is greater than or equal to the maximum dimension D₃₀. The ratio D₂₀/D₃₀ of the diameter D₂₀ to the maximum dimension D₃₀, for example, may be greater than or equal to 1.01, may be greater than or equal to 1.02, may be greater than or equal to 1.03, may be greater than or equal to 1.04, and may be greater than or equal to 1.05. The diameter D₂₀ is smaller than an inner diameter D₁₀, which is the inside dimension of the reaction tank 10 in the direction perpendicular to the rotation axis Ax.

The relationship between the maximum dimension D₃₀ and the inner diameter D₁₀ is not limited to a specific relationship as long as the food processing apparatus 1a satisfies the condition (I), the condition (II), or the conditions (I) and (II). The ratio D₃₀/D₁₀ of the maximum dimension D₃₀ to the inner diameter D₁₀ is, for example, greater than or equal to 0.6, may be greater than or equal to 0.8, and may be greater than or equal to 0.9. In this case, the average value τ_{AVG} of the shearing stress in a minute region of the outer surface 34c easily increases.

In the food processing apparatus 1a, the stirring body 20 rotates, for example, such that a negative angular velocity vector is generated as viewed from the bottom 10b of the reaction tank 10. In this case, a direction upward from the bottom 10b of the reaction tank 10 in the direction parallel to the rotation axis Ax corresponds to the direction of a positive angular velocity vector. In this case, the condition (II) is easily satisfied.

The photocatalyst present at the outer surface 34c is not limited to a specific photocatalyst. The photocatalyst is, for example, a titanium oxide such as TiO2. The catalyst layer 34b can be formed by, for example, a sol-gel method. The material of which the support 34a is formed is not limited to a specific material. The material is, for example, glass.

The tube 34 is, for example, a bottomed circular tube. The tube 34 is open on the side opposite the bottom thereof in the longitudinal direction. The inside of the tube 34 is sealed with a cap 35 attached to the opening of the tube 34.

In the food processing apparatus 1a, the flow of the reactant 5 is generated in the longitudinal direction of the tube 34 when the stirring body 20 rotates. Such a flow of the reactant 5 causes the shearing stress at the outer surface 34c to easily increase.

As illustrated in Fig. 2, the stirring body 20 includes, for example, stirring blades 24. The shape of each of the stirring blades 24 is not limited to a specific shape. Each of the stirring blades 24 has, for example, an outermost end 20e. Fig. 3 is a side view of the stirring blade 24 when the stirring blade 24 is viewed from the outermost end 20e in the direction perpendicular to the rotation axis Ax. As illustrated in Fig. 3, the stirring blade 24 includes, for example, an upper end 24t and a lower end 24b, in addition to the outermost end 20e. The arrows with dashed lines in Fig. 3 indicate the rotation direction of the stirring body 20. The upper end 24t and the lower end 24b are disposed in the order of the lower end 24t and the upper end 24b in the rotation direction of the stirring body 20. The lower end portion 24b is positioned on the side of the bottom 10b of the reaction tank 10. Therefore, the reactant 5 is easily pushed and moved toward the bottom 10b of the reaction tank 10 by the stirring blades 24, and the food processing apparatus 1a easily satisfy the aforementioned condition (II).

As illustrated in Fig. 3, the magnitude of an angle θ that is formed by a normal line N of an upper surface 24s of each stirring blade 24 with the rotation axis Ax is not limited to a specific value as long as the food processing apparatus 1a satisfies the condition (I), the condition (II), or the conditions (I) and (II). The magnitude of the angle θ is, for example, greater than or equal to 30°, may be greater than or equal to 40°, and may be greater than or equal to 45°. The angle θ is less than or equal to 90°, may be less than or equal to 80°, may be less than or equal to 70°, and may be less than or equal to 60°.

As illustrated in Fig. 2, the stirring body 20 further includes a shaft 22. The stirring blades 24 are attached to the shaft 22. The shaft 22 is, for example, coupled to a motor (not illustrated), and the stirring body 20 is rotated by the operation of the motor. The number of the stirring blades 24 of the stirring body 20 is not limited to a specific value. As illustrated in Fig. 2, the stirring body 20 includes, for example, four stirring blades 24. The number of the stirring blades 24 of the stirring body 20 may be one, two, three, or greater than or equal to 5.

When the stirring body 20 includes the stirring blades 24, the positions of the stirring blades 24 in the direction parallel to the rotation axis Ax may be identical to or different from each other.

The position of the stirring body 20 in the reaction tank 10 is not limited to a specific position. As illustrated in Fig. 2, the stirring body 20 is disposed between the catalyst-attached members 30 and the bottom 10b of the reaction tank 10 in the direction parallel to the rotation axis Ax. Such a configuration causes the flow of the reactant 5 to be generated easily in the longitudinal direction of the tube 34 when the stirring body 20 rotates. Thus, the shearing stress at the outer surface 34c easily increases.

The arrangement of the catalyst-attached members 30 in the reaction tank 10 is not limited to a specific arrangement. As illustrated in Fig. 1, the catalyst-attached members 30 include, for example, a first group 30a and a second group 30b. The first group 30a is constituted by the catalyst-attached members 30 that are disposed around the rotation axis Ax such that respective shortest distances to the rotation axis Ax are equal to each other. The second group 30b is constituted by the catalyst-attached members 30 that are disposed on the outer side of the first group 30a around the rotation axis Ax such that respective shortest distances to the rotation axis Ax are equal to each other. Such a configuration enables the catalyst-attached members 30 to be present densely in the reaction tank 10. Consequently, a possibility that a predetermined component of the reactant 5 is transported to the outer surface 34c is increased, and the time required for processing of the reactant 5 is easily reduced. In addition, the shearing stresses at the outer surfaces 34c of the catalyst-attached members 30 belonging to the first group 30a tend to be uniform, and the shearing stresses at the outer surfaces 34c of the catalyst-attached members 30 belonging to the second group 30b tend to be uniform.

The number of the catalyst-attached members 30 belonging to the first group 30a and the number of the catalyst-attached members 30 belonging to the second group 30b are not limited to specific values. The number of the catalyst-attached members 30 belonging to the second group 30b is, for example, greater than the number of the catalyst-attached members 30 belonging to the first group 30a. In this case, a situation in which the shearing stress at the outer surfaces 34c of the catalyst-attached members 30 belonging to the second group 30b is high is extremely advantageous from the point of view of reducing the time required for processing of the reactant 5. The first group 30a includes, for example, six catalyst-attached members 30, and these catalyst-attached members 30 are disposed at equal intervals around the rotation axis Ax. The second group 30b includes, for example, twelve catalyst-attached members 30, and these catalyst-attached members 30 are disposed at equal intervals around the rotation axis Ax.

As illustrated in Fig. 1, the catalyst-attached members 30, for example, further include a third group 30c. The third group 30c is constituted by the catalyst-attached members 30 that are disposed on the outer side of the second group 30b around the rotation axis Ax such that respective shortest distances to the rotation axis Ax are equal to each other. The third group 30c includes, for example, eighteen catalyst-attached members 30.

The liquid reactant 5 is not limited to a specific liquid body. The reactant 5 may be a liquid body that is to be used for manufacture of an alcoholic beverage, may be a liquid body that is to be used for a beverage other than alcoholic beverages, and may be a liquid body that is to be used for manufacture of a flavor enhancer. The reactant 5 may be a liquid body that is to be used for manufacture of a food other than beverages and flavor enhancers.

### Example

With an example, the food processing apparatus in the present disclosure will be described more specifically. Note that the food processing apparatus in the present disclosure is not limited to the following example.

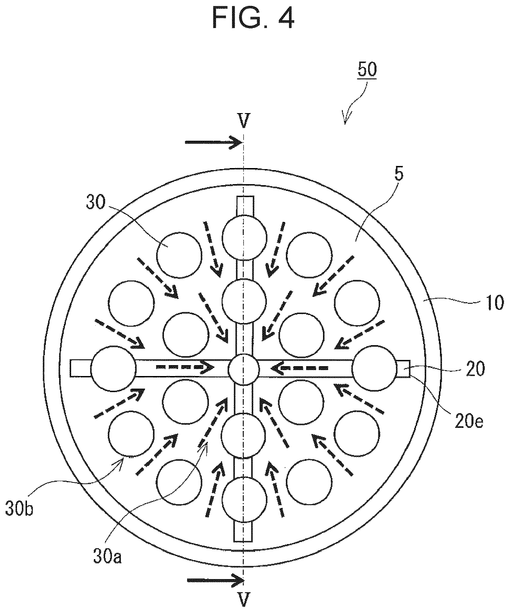

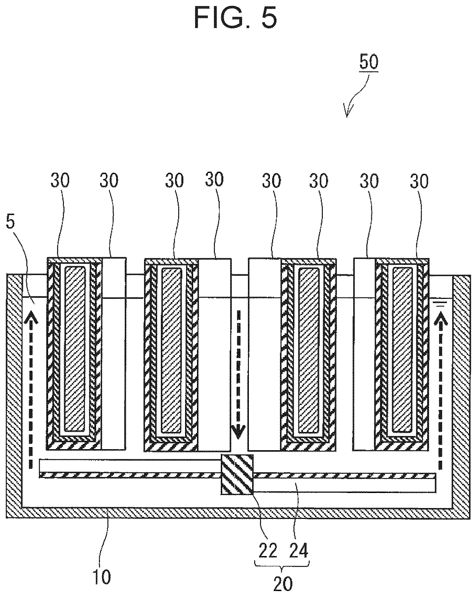

Fig. 4 is a schematic plan view of an analytical model 50 of the food processing apparatus in an example. Fig. 5 is a sectional view of the analytical model 50 taken along the line V-V in Fig. 4.

Fluent 2020 R1 manufactured by Ansys, Inc. was used to perform calculation relating to the analytical model 50 illustrated in Fig. 4 and Fig. 5 in accordance with numerical fluid dynamics. In this calculation, Ansys Space Claim was used for structure design of the analytical model 50, and Ansys Meshing was used for mesh formation of the analytical model 50. Ansys Fluent was used to execute this calculation. Behavior of the analytical model 50 with the rotation of the stirring body 20 was analyzed using normal coordinate models. The normal coordinates models eliminate the need of mesh movement in the calculation in a regular state. CFD Post was used for analysis of calculation results. Through this analysis, the average value τ_{AVG} of the shearing stresses in minute regions of the outer surfaces 34c of the catalyst-attached members 30 was calculated. In addition, stirring energy was calculated from the torque applied on the stirring blades 24 of the stirring body 20 and the rotational speed of the stirring body 20.

In the analytical model 50, the inner diameter ϕv of the reaction tank 10 was 540 mm, and the height of the reaction tank 10 from the bottom 10b was 311 mm. In the analytical model 50, eighteen catalyst-attached members 30 were disposed inside the reaction tank 10. These catalyst-attached members 30 include the first group 30a constituted by six catalyst-attached members 30 and the second group 30b constituted by twelve catalyst-attached members 30. The eighteen catalyst-attached members 30 belonging to the first group 30a or the second group 30b are disposed along the circumferences of two concentric circles in plan view. The six catalyst-attached members 30 belonging to the first group 30a were disposed at equal intervals along the circumference of a circle that has a diameter ϕP1 of 180 mm. The twelve catalyst-attached members 30 belonging to the second group 30b were disposed at equal intervals along the circumference of a circle that has a diameter ϕP2 of 374 mm. An outer diameter ϕS of each of the catalyst-attached members 30 was 60 mm. The distance between the bottom surface of each of the catalyst-attached members 30 and the bottom 10b of the reaction tank 10 was 90 mm. In the analytical model 50, each of the stirring blades 24 of the stirring body 20 had a flat plate shape with a width of 50 mm and a thickness of 2 mm. The stirring body 20 had four stirring blades 24, and the four stirring blades 24 were disposed at equal intervals around the rotation axis of the stirring body 20. The track that was formed by the outermost end 20e of the stirring body 20 when the stirring body 20 rotates was a circle. The average value τ_{AVG} of the shearing stresses in minute regions of the outer surfaces of the catalyst-attached members 30 in each of cases where the diameter D₂₀ of the circle was 384 mm, 408 mm, 432 mm, 456 mm, and 480 mm was calculated. In the analytical model 50, the center of each of the stirring blades 24 in the direction parallel to the rotation axis of the stirring body 20 was positioned at a height of 65 mm from the bottom 10b of the reaction tank 10. In the analytical model 50, the angle θ formed by the normal line N of the upper surface of each of the stirring blades 24 and the rotation axis of the stirring body 20 was 45°.

In the following description except specifically described part, the stirring body 20 was rotated such that a negative angular velocity vector was generated as viewed from the bottom 10b of the reaction tank 10 in the calculation using the analytical model 50. The direction upward from the bottom 10b of the reaction tank 10 in the direction parallel to the rotation axis of the stirring body 20 corresponded to the direction of the positive angular velocity vector. The rotational speed of the stirring body 20 was 3.142 radian/second.

In the calculation using the analytical model 50, the volume of the reactant 5 was 0.06 m³, the density of the reactant 5 was in the range of 1000 kg/m³ to 1010 kg/m³, and the viscosity of the reactant 5 was 1.52 mPa·s.

Calculation results of the average value τ_{AVG} of shearing stresses in minute regions of the outer surfaces 34c of the catalyst-attached members 30 in each of the cases where the diameter D₂₀ was 384 mm, 408 mm, 432 mm, 456 mm, and 480 mm in the analytical model 50 are indicated in Table 1. In Table 1, τ_{AVG1} is the average value of the shearing stresses at the outer surfaces 34c of the catalyst-attached members 30 belonging to the first group 30a, and τ_{AVG2} is the average value of the shearing stresses at the outer surfaces 34c of the catalyst-attached members 30 belonging to the second group 30b. It was confirmed that τ_{AVG2} greatly increased when the diameter D₂₀ increased. It is understood that the ratio of an increase in τ_{AVG2} to an increase in the diameter D₂₀ greatly varies between the case where the diameter D₂₀ is less than or equal to 432 mm and the case where the diameter D₂₀ is greater than 432 mm. It is understood that the ratio of the increase in τ_{AVG2} to the increase in the diameter D₂₀ increases when the diameter D₂₀ is greater than 432 mm. The sum of the diameter ϕP2 and the outer diameter ϕS is 434 mm. The sum corresponds to the maximum dimension D₃₀ of the member group constituted by the eighteen catalyst-attached members 30 in the direction perpendicular to the rotation axis of the stirring body 20. Therefore, it is understood that the relationship between the diameter D₂₀ and the maximum dimension D₃₀ is important to increase the average value τ_{AVG2} of the shearing stresses at the outer surfaces 34c of the catalyst-attached members 30 belonging to the second group 30b.

In the analytical model 50, the flow velocity vector of the reactant 5 generated by the rotation of the stirring body 20 was analyzed. The arrows with dashed lines in Fig. 4 and Fig. 5 schematically indicate a state of the convection current of the reactant 5 in the reaction tank 10. As illustrated in Fig. 5, a strong convection current from a lower portion toward an upper portion of the reaction tank 10 was generated between the catalyst-attached members 30 belonging to the second group 30b and the inner wall of the reaction tank 10. As illustrated in Fig. 4, a strong convection current toward the center of the reaction tank 10 was generated in an upper portion of the reaction tank 10. In the reaction tank 10, a strong convection current from the upper portion toward the lower portion of the reaction tank 10 was generated on the inner side of the catalyst-attached members 30 belonging to the first group 30a. The combination of these three strong convection currents circulates the reactant 5 in the reaction tank 10. Therefore, the flow of the reactant 5 in the longitudinal direction of the tubes 34 of the catalyst-attached members 30 was generated in the reaction tank 10. It was suggested that, when the diameter D₂₀ was greater than or equal to the maximum dimension D₃₀, the circulating convection current of the reactant 5 was reinforced and, in particular, the average value τ_{AVG2} was increased.

In the analytical model 50, the average value of the shearing stresses at the outer surfaces 34c of the catalyst-attached members 30 when the rotation direction of the stirring body 20 was changed under a condition in which the diameter D₂₀ was 480 mm was calculated. Results are indicated in Table 2. The rotational speed of the stirring body 20 was 3.142 radian/second. As indicated in Table 2, it is understood that the average value τ_{AVG2} increases when the stirring body 20 rotates such that a negative angular velocity vector is generated as viewed from the bottom 10b of the reaction tank 10, compared with when a positive angular velocity vector is generated. In the analytical model 50, the flow velocity vector of the reactant 5 generated by the rotation of the stirring body 20 was analyzed. It is found that, when the stirring body 20 rotates such that a negative angular velocity vector is generated as viewed from the bottom 10b of the reaction tank 10, the circulating convection current indicated by the arrows with dashed lines in Fig. 4 and Fig. 5 is reinforced and the average value τ_{AVG2} is increased.

**[Table 1]**

| Diameter D₂₀ [mm] | Average Value [Pa] of Shearing Stress | |
|---|---|---|
| | τ_{AVG1} | τ_{AVG2} |
| 384 | 0.434 | 0.617 |
| 408 | 0.435 | 0.630 |
| 432 | 0.435 | 0.651 |
| 456 | 0.437 | 0.750 |
| 480 | 0.440 | 0.862 |

**[Table 2]**

| Angular Velocity Vector | Average Value τ_{AVG2} [Pa] of Shearing Stress |
|---|---|
| Positive | 0.494 |
| Negative | 0.862 |

### Industrial Applicability

The food processing apparatus in the present disclosure is useful in processing of a liquid reactant for food.

### Reference Signs List

1a food processing apparatus
5 reactant
10 reaction tank
10b bottom
20 stirring body
24 stirring blade
24b lower end
24t upper end
20e outermost end
30 catalyst-attached member
30a first group
30b second group
32 light source
34 tube
34c outer surface
Ax rotation axis
L₂₀ track
D₂₀ diameter
D₃₀ maximum dimension

## Claims

1. A food processing apparatus comprising:
a reaction tank in which a liquid reactant for food is to be stored;
a stirring body that is rotatable and that stirs the reactant stored in the reaction tank; and
catalyst-attached members that are disposed inside the reaction tank to be away from each other around a rotation axis of the stirring body,
wherein each of the catalyst-attached members includes a light source and a tube,
wherein the tube has an outer surface at which a photocatalyst is present, and the tube accommodates the light source and transmits light from the light source, and
wherein the stirring body satisfies a following condition (I), a following condition (II), or the following conditions (I) and (II),
(I) a diameter of a circle that is a track formed by an outermost end of the stirring body in a direction perpendicular to the rotation axis when the stirring body rotates is greater than or equal to a maximum dimension of the catalyst-attached members in the direction perpendicular to the rotation axis,
(II) the stirring body pushes the reactant toward a bottom of the reaction tank in a direction parallel to the rotation axis when the stirring body rotates.

2. The food processing apparatus according to claim 1, wherein the stirring body generates a flow of the reactant in a longitudinal direction of the tube when the stirring body rotates.

3. The food processing apparatus according to claim 1 or 2,
wherein the stirring body includes a stirring blade including the outermost end, an upper end, and a lower end, and
wherein, when the stirring body is viewed from the outermost end in the direction perpendicular to the rotation axis, the upper end and the lower end are disposed in order of the lower end and the upper end in a rotation direction of the stirring body, and the lower end is positioned on a side of the bottom of the reaction tank.

4. The food processing apparatus according to any one of claims 1 to 3, wherein the stirring body is disposed between the catalyst-attached members and the bottom of the reaction tank in the direction parallel to the rotation axis.

5. The food processing apparatus according to any one of claims 1 to 4, wherein the catalyst-attached members include a first group and a second group, the first group being constituted by catalyst-attached members that are disposed around the rotation axis such that respective shortest distances to the rotation axis are equal to each other and the second group being constituted by catalyst-attached members that are disposed on an outer side of the first group around the rotation axis such that respective shortest distances to the rotation axis are equal to each other.

6. An apparatus comprising:
a reaction tank in which a liquid reactant for food is to be stored;
a stirring body that is rotatable and that stirs the reactant stored in the reaction tank; and
catalyst-attached members that are disposed inside the reaction tank to be away from each other around a rotation axis of the stirring body,
wherein each of the catalyst-attached members includes a light source and a tube,
wherein the tube has an outer surface at which a photocatalyst is present, and the tube accommodates the light source and transmits light from the light source, and
wherein the stirring body satisfies a following condition (I), a following condition (II), or the following conditions (I) and (II),
(I) a diameter of a circle that is a track formed by an outermost end of the stirring body in a direction perpendicular to the rotation axis when the stirring body rotates is greater than or equal to a maximum dimension of the catalyst-attached members in the direction perpendicular to the rotation axis,
(II) the stirring body pushes the reactant toward a bottom of the reaction tank in a direction parallel to the rotation axis when the stirring body rotates.
